# EUROPEAN PATENT SPECIFICATION

(11) **EP 0 514 577 B1**
(45) Date of publication and mention of the grant of the patent: **29.10.1997**
(21) Application number: 91108421.8
(22) Date of filing: 24.05.1991
(51) Int. Cl.: C04B 33/10, C09C 1/42

(54) **Process for the deironing of ceramic materials**
Verfahren zur Enteisenung von keramischen Materialien
Méthode de déferrage de materiaux céramiques

(43) Date of publication of application: 25.11.1992
(73) Proprietor: CONSIGLIO NAZIONALE DELLE RICERCHE, 00185 Roma (IT)
(72) Inventor: Passariello, Bruno, I-00019 Tivoli (Rome) (IT)
(74) Representative: Gervasi, Gemma, Dr.

(56) References cited:
- DE-A- 618 022
- US-A- 1 897 638
- WORLD PATENTS INDEX LATEST Week 8332, Derwent Publications Ltd., London, GB; AN 83-733162 & SU-A-962 258 (MAGN MINE METAL INS) 30 September 1982
- WORLD PATENTS INDEX Week 7330, Derwent Publications Ltd., London, GB; AN 73-42088 & SU-A-358 269 (PAPER RES INST)
- H.Zwahr: SILIKATTECHNIK, Vol. 32 (9), 1981, pages 262-265

## Description

### State of the art

After undergoing other purification processes, materials for ceramics, glass, paper and electronics use are finally bleached by eliminating iron compounds by a process of classical reduction with sodium hydrosulphite (Na₂S₂O₄) in a sulphuric medium (pH < 3).

By this method the iron is dissolved in the form of FeSO₄, which is then removed by filtration under pressure (see in this respect FR-A-2030738; US-A-3528769; RO-A-49334: SU-A-485093; SU-A-628087; "Formation of aggressive substances in East German kaolins", Silikattechnik (81) p. 262-5, Vol. 32, No. 9).

However with these processes in most cases it is not possible to obtain high-quality products (for example the degree of whiteness obtainable in a kaolin by these methods is about 85-88%).

This is because the hydrosulphite is unable to reduce all the iron, which is present in the form of various chemical compositions.

With the treatment according to the present invention, using ascorbic, oxalic, citric or tannic acid in the presence of H₂SO₄ (pH < 3), it is possible to reduce the iron present in its various compounds by making it totally soluble and hence removable by washing. In this manner a degree of whiteness of 89-94% is obtained, this representing a considerable improvement over the results obtained by traditional methods.

SU-A-358269 discloses a process for remowing irons from kaolin by treating a suspension of kaolin containing hydrochloric acid with sodium hydrosulfite either in the presence or in the absence of oxalic acid: the witheness of the final product is the same (83%) indipendently on the presence of oxalic acid.

DE-C-618022 discloses a process for the extraction from minerals of compounds soluble in halogen acids, which is carried out by mixing a solid organic acid, such as oxalic acid, and a salt selected from halides of alkali metals, alkaline-earth metals and aluminum; a necessary condition is that at least one of the components contains crystallization water. The process is carried out at 120-130°C in a dried condition.

U.S. 1.897.638 describes a process for the purification of silica contaminated with iron by treating the material with a solution of H₂SO₄ containing sulphur dioxide. Nothing is said about the whiteness of the material after the purification.

### Summary of the invention

With the treatment according to the present invention, using ascorbic, oxalic, citric or tannic acid in the presence of H₂SO₄ (pH < 3), it is possible to reduce the iron present in its various compounds by making it totally soluble and hence removable by washing. In this manner a degree of whiteness of 89-94% is obtained, this representing a considerable improvement over the results obtained by traditional methods.

### Detailed description of the invention

The mineral is suspended in water and the ascorbic acid or its derivatives is suspended in this suspension in a quantity of between 0.1% and 5%. The suspension pH is then adjusted to below 3 (preferably between 2 and 3) with H₂SO₄.

The suspension is heated to a temperature of 65-85°C for 1-3 hours under stirring. The deferrized product is then collected by filtration, washed with water and dried.

The tests for determining the degree of whiteness were carried out by firing the sample in a Seger No. 8 cone and determining the whiteness index with a Photovolt Reflection Meter 670, using a green filter (λ = 550 µm). Two buttons of each sample were obtained by casting in plaster moulds.

The chemical, mineralogical and morphological characteristics of the kaolin and quartzose sand used in the subsequently described examples are given below.

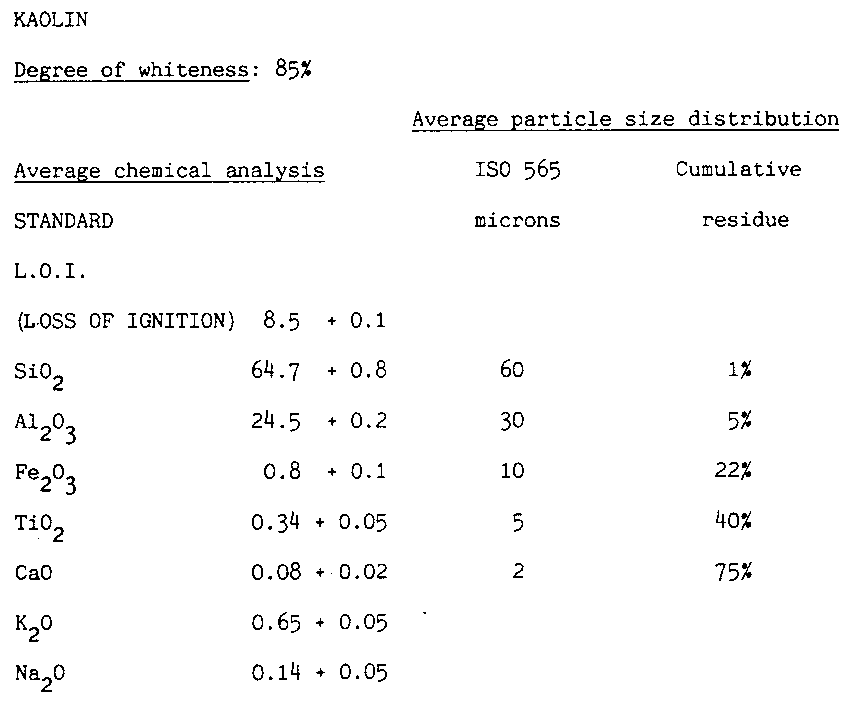

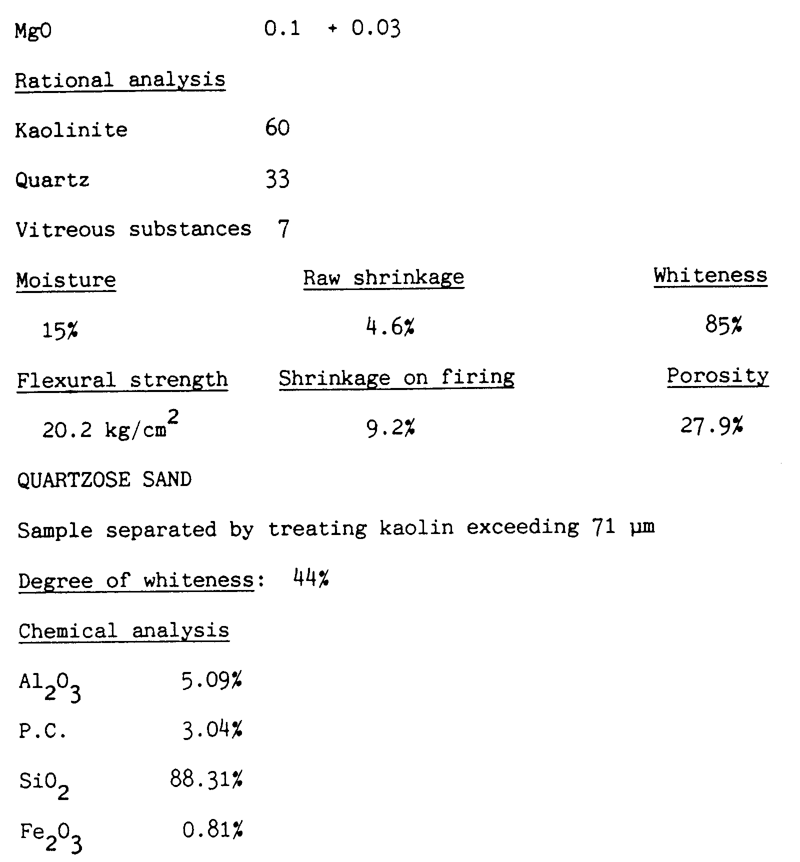

### EXAMPLE 1

100 g of kaolin are made up to 400 cc with water, 4 g of ascorbic acid are added and the pH adjusted to 2.5 with H₂SO₄. The suspension is heated to 72°C and left stirring for 2 h. The residue is filtered off and washed with hot water.

### (Degree of whiteness after firing 91.5%).

### EXAMPLE 2

100 g of kaolin are made up to 300 cc with water, 4 g of ascorbic acid are added and the pH adjusted to 2.5 with H₂SO₄. The suspension is heated to 72°C and left stirring for 1 h. The residue is filtered off and washed with hot water.
(Degree of whiteness after firing 91%).

### EXAMPLE 3

100 g of kaolin are made up to 300 cc with the solution of the preceding test, and the pH adjusted to 2.3 with H₂SO₄. The suspension is heated to 72°C and left stirring for 2 h. The residue is filtered off and washed with hot water.
(Degree of whiteness after firing 89%).

### EXAMPLE 4

100 g of kaolin are made up to 300 cc with water, 4 g of ascorbic acid are added and the pH adjusted to 2.5 with H₂SO₄. The suspension is heated to 72°C and left stirring for 3 h. A further 1 g of ascorbic acid is added, the pH readjusted to 2.5 with sulphuric acid the suspension left stirring for 1 h. The residue is filtered off and washed with hot water.
(Degree of whiteness after firing 93.5%).

### EXAMPLE 5

100 g of kaolin are made up to 300 cc with water, 0.5 g of ascorbic acid are added and the pH adjusted to 2.5 with H₂SO₄. The suspension is heated to 85°C and left stirring for 2 h. The residue is filtered off and washed with hot water.
(Degree of whiteness after firing 91%).

### EXAMPLE 6

100 g of kaolin are made up to 300 cc with water, 0.12 g of ascorbic acid are added and the pH adjusted to 2.5 with H₂SO₄. The suspension is heated to 85°C and left stirring for 3 h. The residue is filtered off and washed with hot water.
(Degree of whiteness after firing 90.5%).

### EXAMPLE 7

100 g of kaolin are made up to 300 cc with water, 0.5 g of ascorbic acid are added and the pH adjusted to 2.5 with H₂SO₄. The suspension is heated to 80°C and left stirring for 1 h. A further 0.5 g of ascorbic acid are added and the suspension again heated to 80°C for 1 h. The residue is filtered off and washed with hot water.
(Degree of whiteness after firing 89%).

### EXAMPLE 8

100 g of kaolin are made up to 300 cc with water, the pH is adjusted to 2.5 with H₂SO₄ and the suspension left stirring for 3 h. 0.5 g of ascorbic acid are added and the suspension heated to 80°C for 1 h, a further 0.5 g of ascorbic acid are added and the suspension again heated to 80°C for 1 h under stirring. The residue is filtered off and washed with hot water.
(Degree of whiteness after firing 93.5%).

### COMPARATIVE EXAMPLE 9

100 g of quartzose sand are made up to 300 cc with water, 4 g of ascorbic acid are added to the suspension and the pH is adjusted to 2.3 with sulphuric acid. The suspension is heated to 60°C and left stirring for 2 h. The residue is filtered off and washed with hot water.
(Degree of whiteness after firing 54%).

### COMPARATIVE EXAMPLE 10

100 g of quartzose sand are made up to 300 cc with water, 4 g of oxalic acid are added to the suspension and the pH is adjusted to 2.3 with sulphuric acid. The suspension is heated to 60°C and left stirring for 2 h. The residue is filtered off and washed with hot water.
(Degree of whiteness after firing 52%).

### EXAMPLE 11

100 g of kaolin are made up to 300 cc with water, 1 g of K₂S₂O₇ are added to the suspension and the pH is adjusted to 2.3 with sulphuric acid. The suspension is heated to 75°C under stirring for 2 h. 1 g of ascorbic acid are now added and the system left stirring for 1 h. The residue is filtered off and washed with hot water.
(Degree of whiteness after firing 89%).

### EXAMPLE 12

100 g of mineral are made up to 300 cc with water, 4 g of oxalic acid are added to the suspension and the pH is adjusted to 2.4 with sulphuric acid. The suspension is heated to 80°C and left stirring for 2 h. The residue is filtered off and washed with hot water.
(Degree of whiteness after firing 92%).

### EXAMPLE 13

100 g of mineral are made up to 300 cc with water, 4 g of citric acid are added to the suspension and the pH is adjusted to 2.5 with sulphuric acid. The suspension is heated to 80°C and left stirring for 2 h. The residue is filtered off and washed with hot water.
(Degree of whiteness after firing 89%).

### EXAMPLE 14

100 g of mineral are made up to 300 cc with water, 4 g of tannic acid are added to the suspension and the pH is adjusted to 2.3 with sulphuric acid. The suspension is heated to 80°C and left stirring for 2 h. The residue is filtered off and washed with hot water.
(Degree of whiteness after firing 89%).

## Claims

1. A process for purifying kaolin, quartzose sand, paper filler, white pigment, pumice and ceramic materials for electronic devices, wherein the mineral is suspended in water in the presence of H₂SO₄ at pH between 2 and 3, ascorbic, oxalic, citric or tannic acid is added in a quantity of between 0.1 to 5% by weight of the product to be purified, the suspension is heated at 65°-85°C under stirring, and the residue is finally collected by filtration.

2. A process as claimed in claim 1, wherein the stirring time is 1-3 hours.

3. A process as claimed in claims 1 and 2, wherein ascorbic acid is used.

4. A process as claimed in claims 1 and 2, wherein oxalic acid is used.

5. A process as claimed in claims 1 and 2, wherein citric acid is used.

6. A process as claimed in claims 1 and 2, wherein tannic acid is used.

## Patentansprüche

1. Verfahren zur Reinigung von Kaolin, Quarzsand, Papierfüllstoff, weißen Pigmenten, Bimsstein und keramischen Materialien für elektronische Vorrichtungen, bei dem das Mineral in Wasser in Gegenwart von H₂SO₄ bei einem pH-Wert zwischen 2 und 3 suspendiert wird, Ascorbinsäure, Oxalsäure, Citronensäure oder Gerbsäure in einer Menge zwischen 0,1 bis 5 Gew.-% des zu reinigenden Produktes zugegeben wird, die Suspension bei 65 °C bis 85 °C unter Rühren erhitzt wird, und der Rückstand schließlich durch Filtration gewonnen wird.

2. Verfahren nach Anspruch 1, dadurch gekennzeichnet, daß die Rührzeit 1 bis 3 Stunden beträgt.

3. Verfahren nach Anspruch 1 und 2, dadurch gekennzeichnet, daß Ascorbinsäure verwendet wird.

4. Verfahren nach Anspruch 1 und 2, dadurch gekennzeichnet, daß Oxalsäure verwendet wird.

5. Verfahren nach Anspruch 1 und 2, dadurch gekennzeichnet, daß Citronensäure verwendet wird.

6. Verfahren nach Anspruch 1 und 2, dadurch gekennzeichnet, daß Gerbsäure verwendet wird.

## Revendications

1. Procédé pour la purification de kaolin, de sable de quartzose, de charge pour papiers, de pigment blanc, de pierre ponce et de matériaux céramiques pour dispositifs électroniques, dans lequel le minéral est mis en suspension dans de l'eau en présence de H₂SO₄ à un pH compris entre 2 et 3, de l'acide ascorbique, de l'acide oxalique, de l'acide citrique ou de l'acide tannique est ajouté en une quantité comprise entre 0,1% et 5% en poids du produit à purifier, la suspension est chauffée à une température comprise entre 65°C et 85°C sous agitation et le résidu est finalement recueilli par filtration.

2. Procédé suivant la revendication 1, dans lequel le temps d'agitation est de 1 à 3 heures.

3. Procédé suivant les revendications 1 et 2, dans lequel il est utilisé de l'acide ascorbique.

4. Procédé suivant les revendications 1 et 2, dans lequel il est utilisé de l'acide oxalique.

5. Procédé suivant les revendications 1 et 2, dans lequel il est utilisé de l'acide citrique.

6. Procédé suivant les revendications 1 et 2, dans lequel il est utilisé de l'acide tannique.
